# EUROPEAN PATENT SPECIFICATION

(11) **EP 2 671 914 B1**
(45) Date of publication and mention of the grant of the patent: **12.07.2017**
(21) Application number: 12742440.6
(22) Date of filing: 02.02.2012
(51) Int. Cl.: C08L 9/02, C08L 15/00, C08K 3/00, C08K 5/00, C08J 3/215, C08J 5/00, C08C 19/02, C08C 1/14, C08F 2/22, C08L 27/06, C08L 33/06, F16L 11/04, C08L 9/04, C08K 3/34, C08F 236/12, C08F 226/06, C08F 114/06, C08F 220/14, C08F 220/44, C08L 33/12, C08L 33/18, C08F 2/26, C08K 3/06, C08K 5/14, C08K 5/11, C08K 3/04

(54) **NITRILE RUBBER COMPOSITION, CROSSLINKABLE NITRILE RUBBER COMPOSITION AND CROSSLINKED RUBBER PRODUCT**
NITRILKAUTSCHUKZUSAMMENSETZUNG, VERNETZBARE NITRILKAUTSCHUKZUSAMMENSETZUNG UND VERNETZTES KAUTSCHUKPRODUKT
COMPOSITION DE CAOUTCHOUC NITRILE, COMPOSITION DE CAOUTCHOUC NITRILE RÉTICULABLE ET PRODUIT DE CAOUTCHOUC RÉTICULÉ

(30) Priority: 03.02.2011 JP 2011021799
(43) Date of publication of application: 11.12.2013
(73) Proprietor: Zeon Corporation, Tokyo 100-8246 (JP)
(72) Inventor: TAKEYAMA, Yoshihisa, Tokyo 100-8246 (JP); TSUKADA, Akira, Tokyo 100-8246 (JP)
(74) Representative: Beckmann, Claus
(86) International application number: PCT/JP2012/052386
(87) International publication number: WO 2012/105645

(56) References cited:
- EP-A1- 2 246 389
- WO-A1-2008/123405
- WO-A1-2010/050552
- WO-A1-2011/016479
- JP-A- H05 508 606
- JP-A- 2002 293 984
- JP-A- 2003 201 373
- JP-A- 2003 327 711
- JP-A- 2004 051 748
- JP-A- 2005 048 155
- JP-A- 2005 232 257
- JP-A- 2006 070 137
- JP-A- 2008 115 402

## Description

### TECHNICAL FIELD

The present invention relates to a nitrile rubber composition and cross-linkable nitrile rubber composition which give cross-linked nitrile rubber which is excellent in gasoline permeation resistance and cold resistance and to cross-linked rubber of the same.

### BACKGROUND ART

In the past, rubber which contains α,β-ethylenically unsaturated nitrile monomer units and conjugated diene monomer units (nitrile rubber) has been known as rubber which is excellent in oil resistance. This is mainly used as a material for fuel hoses, fuel gaskets, fuel packings, oil seals, inlet hoses and various other rubber products used around oil in industrial parts and automobiles.

In these applications, excellence in oil resistance is also an important demand, but recently rising environmental protection movements around the world have led to progress in efforts to reduce the amount of evaporation of gasoline and other fuel into the atmosphere. For example, in Japan and Europe, NOₓ emissions have been restricted. Along with this, reduction of the evaporation of fuel is being sought. For this reason, in fuel hoses, seals, packing, and other applications, much better gasoline permeation resistance is being sought.

Under such a situation, Patent Document 1 discloses as a polymer composition which gives a polymer product which is improved in gas barrier property, a polymer composition including a polymer ingredient which is obtained by coagulation and/or drying a polymer latex in which layered silicates which swell in an aqueous medium are dispersed. However, in this Patent Document 1, there was the problem that the cold resistance deteriorates when made into a polymer product.

WO 2010/050552 A1 describes a nitrile copolymer latex composition which comprises a latex of a nitrile copolymer rubber (A) containing 20 to 70 wt% of an α,β-ethylenically unsaturated nitrile monomer unit and a plate-like filler (B). In the composition, the plate-like filler (B) has a swelling power in water of 15 to 55 (ml/2 g). When the composition is mixed with an aqueous medium at a concentration of 5 wt% to prepare a slurry, the slurry has thixotropic index (a TI value) of 1 to 6. In the composition, the quantity of the plate-like filler (B) is 1 to 200 parts by weight relative to 100 parts by weight of the nitrile copolymer rubber (A).

EP 2 246 389 A1 describes a nitrile copolymer latex composition containing a latex of a nitrile copolymer rubber (A) having 10 to 75 wt% of α,β-ethylenically unsaturated nitrile monomer units, 5 to 89.9 wt% of conjugated diene monomer units, and 0.1 to 20 wt% of cationic monomer units and/or monomer units able to form cations, an inorganic filler (B) having an aspect ratio of 30 to 2,000, and a plasticizer (C) having an SP value by the HOY method of 8 to 10.2 (cal/cm³)^{1/2}, wherein a content of said plasticizer (C) is 0.1 to 200 parts by weight with respect to said nitrile copolymer rubber (A) as 100 parts by weight is provided.

### PRIOR ART DOCUMENTS

### PATENT DOCUMENTS

Patent Document 1: Japanese Patent Publication No. 2004-51748A

### DISCLOSURE OF THE INVENTION

### PROBLEM TO BE SOLVED BY THE INVENTION

The present invention has as its object to provide a nitrile rubber composition and cross-linkable nitrile rubber composition which give a cross-linked nitrile rubber which is excellent in gasoline permeation resistance and cold resistance and a cross-linked rubber of the same.

### MEANS FOR SOLVING THE PROBLEMS

The inventors engaged in intensive studies to achieve this object and as a result discovered that when the surface area particle size distribution of a layered inorganic filler is in a specific range, a cross-linked rubber can be made which exhibits extremely good gasoline permeation resistance and cold resistance and thereby completed the present invention.

That is, according to the present invention, there is provided a nitrile rubber composition as defined in claim 1. Further, a content ratio of the cationic monomer units of the nitrile rubber (A) is preferably 0.1 to 20 wt%. Preferably, the monomer which forms the cationic monomer units is a vinyl group-containing cyclic tertiary amine monomer. Further, the nitrile rubber composition of the present invention preferably further contains at least one type of thermoplastic resin selected from the group comprising a vinyl chloride resin and an acrylic resin in a ratio of 1 to 150 parts by weight with respect to 100 parts by weight of the nitrile rubber (A).

Further, according to the present invention, there is provided a cross-linkable nitrile rubber composition containing the above-mentioned nitrile rubber composition and a cross-linking agent, and a cross-linked rubber obtained by cross-linking the cross-linkable nitrile rubber composition. Further, there is provided a hose made from the cross-linked rubber of the present invention.

Furthermore, according to the present invention, there is provided a method of production of the above-mentioned nitrile rubber composition as defined in claim 8.

### EFFECTS OF THE INVENTION

According to the present invention, there are provided a nitrile rubber composition and cross-linkable nitrile rubber composition which can give cross-linked nitrile rubber which is excellent in gasoline permeation resistance and cold resistance and cross-linked rubber of the same. As a result, the cross-linked rubber which is obtained by using the nitrile rubber composition of the present invention is excellent in gasoline permeation resistance and cold resistance in addition to the inherent properties of nitrile rubber with excellent oil resistance.

### BRIEF DESCRIPTION OF FIGURES

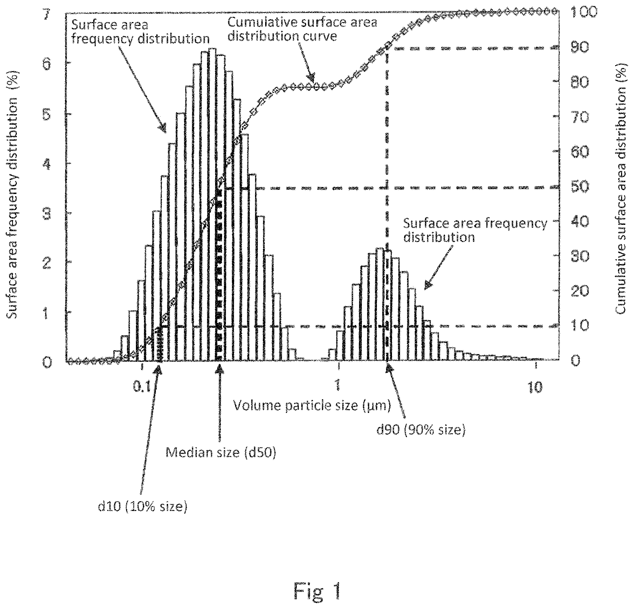

[FIG. 1] FIG. 1 is a view for explaining the median size (d50); d10, and d90 in the surface area particle size distribution of the layered inorganic filler (B).

### DESCRIPTION OF EMBODIMENTS

The nitrile rubber composition of the present invention contains a nitrile rubber (A) which contains, with respect to the total monomer units, 20 to 80 wt% of α,β-ethylenically unsaturated nitrile monomer units, 20 to 80 wt% of conjugated diene monomer units which may be at least partially hydrogenated, and 0 to 30 wt% of cationic monomer units and a layered inorganic filler (B) with a surface area particle size distribution wherein a) a median size (d50) of the cumulative surface area distribution is 0.20 µm to 6.0 µm and b) d90-d10 of the cumulative surface area distribution is 1.1 µm or more in a ratio of 1 to 100 parts by weight with respect to 100 parts by weight of the nitrile rubber (A).

### Nitrile Rubber (A)

The nitrile rubber (A) used in the present invention is nitrile rubber which contains 20 to 80 wt% of α,β-ethylenically unsaturated nitrile monomer units, 20 to 80 wt% of conjugated diene monomer units which may be at least partially hydrogenated, and 0 to 30 wt% of cationic monomer units.

The α,β-ethylenically unsaturated nitrile monomer which forms the α,β-ethylenically unsaturated nitrile monomer units is not particularly limited so long as an α,β-ethylenically unsaturated compound which has a nitrile group, but, for example, acrylonitrile; α-chloroacrylonitrile, α-bromoacrylonitrile, and other α-halogenoacrylonitriles; methacrylonitrile and other α-alkyl acrylonitriles may be mentioned. Among these as well, acrylonitrile and methacrylonitrile are preferable, and acrylonitrile is particularly preferable. These may be used as single types alone or as a plurality of types combined.

The content ratio of the α,β-ethylenically unsaturated nitrile monomer units in the nitrile rubber (A) is 20 to 80 wt% with respect to the total monomer units, preferably 30 to 70 wt%, more preferably 40 to 65 wt%. If the content ratio of the α,β-ethylenically unsaturated nitrile monomer units is too low, the obtained cross-linked rubber deteriorates in oil resistance and deteriorates in gasoline permeation resistance. On the other hand, if the content ratio of the α,β-ethylenically unsaturated nitrile monomer units is too high, the obtained cross-linked rubber becomes high in embrittlement temperature and inferior in cold resistance.

The nitrile rubber (A) used in the present invention contains conjugated diene monomer units since the obtained cross-linked rubber has rubber elasticity. Note that, the conjugated diene monomer units may be at least partially hydrogenated.

As the conjugated diene monomers which form the conjugated diene monomer units, conjugated diene monomers with 4 to 6 carbon atoms are preferable. For example, 1,3-butadiene, isoprene, 2,3-dimethyl-1,3-butadiene and 1,3-pentadiene may be mentioned. Among these as well, 1,3-butadiene is preferable. These may be used as single types alone or as a plurality of types combined.

The content ratio of the conjugated diene monomer units in the nitrile rubber (A) is 20 to 80 wt% with respect to the total monomer units, preferably 29.9 to 69.9 wt%, more preferably 34.7 to 59.7 wt%.

If the content ratio of the conjugated diene monomer units is too low, the obtained cross-linked rubber is liable to fall in rubber elasticity. On the other hand, if the content ratio of the conjugated diene monomer units is too large, the obtained cross-linked rubber may deteriorate in gasoline permeation resistance.

Further, the nitrile rubber (A) used in the present invention preferably contains cationic monomer units selected from the group consisting of cation-containing monomer units and monomer units able to form cations.

The cation-containing monomer which forms the cationic monomer units is not particularly limited so long as a monomer which forms monomer units which become charged plus when the obtained polymer contacts water or an acid aqueous solution. As such a cation-containing monomer, for example, a monomer which contains a quaternary ammonium salt group may be mentioned. Further, as the monomer which forms monomer units able to form cations, a monomer which has a precursor part (substituent) such as a tertiary amino group which forms ammonium salts (for example, an amine hydrochloric acid salt or amine sulfuric acid salt) and other cations when contacting hydrochloric acid, sulfuric acid or other acid aqueous solution may be mentioned.

As specific examples of the cation-containing monomer, (meth)acryloyloxytrimethyl ammonium chloride, (meth)acryloyloxyhydroxypropyltrimethyl ammonium chloride, (meth)acryloyloxytriethyl ammonium chloride, (meth)acryloyloxydimethylbenzyl ammonium chloride, (meth)acryloyloxytrimethyl ammonium methyl sulfate, and other (meth)acrylic acid ester monomers which contain a group having a quaternary ammonium salt; (meth)acrylamidepropyltrimethyl ammonium chloride, (meth)acrylamidepropyldimethylbenzyl ammonium chloride, and other (meth)acrylamide monomers which contain a group having a quaternary ammonium salt may be mentioned.

As specific examples of the monomer which forms the monomer units able to form cations, 2-vinylpyridine, 4-vinylpyridine, and other vinyl group-containing cyclic tertiary amine monomers; dimethylaminoethyl (meth)acrylate and other tertiary amino group-containing (meth)acrylic acid ester monomers; dimethylaminoethyl (meth)acrylamide, N,N-dimethylaminopropyl acrylamide, and other tertiary amino group-containing (meth)acrylamide monomers; N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinyl benzyloxy) aniline and N-phenyl-4-(4-vinyl benzyloxy)aniline may be mentioned. These may be used as single types alone or as a plurality of types combined.

Among the above-mentioned monomers as well, since the advantageous effects of the present invention become more remarkable, vinyl group-containing cyclic tertiary amine monomers, tertiary amino group-containing (meth)acrylic acid ester monomers, and tertiary amino group-containing (meth)acrylamide monomers are preferable, while vinyl group-containing cyclic tertiary amine monomers and tertiary amino group-containing acrylamide monomers are more preferable, vinyl group-containing cyclic tertiary amine monomers are furthermore preferable and, among these, vinyl group-containing pyridines are particularly preferable and 2-vinyl pyridine is most preferable.

The content ratio of cationic monomer units is 0 to 30 wt% with respect to the total monomer units, preferably 0.1 to 20 wt%, more preferably 0.3 to 10 wt%. By including cationic monomer units, the obtained cross-linked rubber becomes more excellent in gasoline permeation resistance.

Further, the nitrile rubber (A) used in the present invention may contain, in addition to the above-mentioned α,β-ethylenically unsaturated nitrile monomer units, conjugated diene monomer units, and cationic monomer units, units of other monomers which can copolymerize with the monomers which form these monomer units. The content ratio of such other monomer units is preferably 30 wt% or less with respect to the total monomer units, more preferably 20 wt% or less, furthermore preferably 10 wt% or less.

As such copolymerizable other monomers, for example, fluoroethylvinyl ether, fluoropropylvinyl ether, o-(trifluoro)methylstyrene, vinyl pentafluorobenzoate, difluoroethylene, tetrafluoroethylene, and other fluorine-containing vinyl compounds; 1,4-pentadiene, 1,4-hexadiene, vinyl norbornene, dicyclopentadiene, and other unconjugated diene compounds; ethylene; propylene, 1-butene, 4-methyl-1-pentene, 1-hexene, 1-octene, and other α-olefin compounds; acrylic acid, methacrylic acid, and other α,β-ethylenically unsaturated monovalent carboxylic acids; maleic acid, maleic anhydride, itaconic acid, itaconic anhyride, fumaric acid, and other α,β-ethylenically unsaturated polyvalent carboxylic acids and their anhydrides; methyl(meth)acrylate, ethyl (meth)acrylate, butyl (meth)acrylate, 2-ethylhexyl(meth)acrylate, and other α,β-ethylenically unsaturated carboxylic acid alkyl esters; monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, dibutyl itaconate, and other monoesters and diesters of α,β-ethylenically unsaturated polyvalent carboxylic acids; methoxyethyl (meth)acrylate, methoxypropyl (meth)acrylate, butoxyethyl (meth)acrylate, and other alkoxyalkyl esters of α,β-ethylenically unsaturated carboxylic acids; 2-hydroxyethyl (meth)acrylate, 3-hydroxypropyl (meth)acrylate, and other hydroxyalkyl esters of α,β-ethylenically unsaturated carboxylic acids; divinylbenzene and other divinyl compounds; ethylene di(meth)acrylate, diethyleneglycol di(meth)acrylate, ethyleneglycol di(meth)acrylate, and other di(meth)acrylic acid esters; trimethylolpropane tri (meth) acrylate and other tri(meth)acrylic acid esters; and other polyfunctional ethylenically unsaturated monomers and also N-methylol (meth)acrylamide, N,N'-dimethylol (meth)acrylamide, and other self-cross-linkable compounds, may be mentioned.

The nitrile rubber (A) has a Mooney viscosity (below, sometimes referred to as the "polymer Mooney viscosity") (ML₁₊₄, 100°C) of 3 to 250, preferably 15 to 180, more preferably 20 to 160. If the nitrile rubber (A) is too low in polymer Mooney viscosity, the obtained cross-linked rubber is liable to fall in strength characteristics. On the other hand, if too high, the workability may deteriorate.

The nitrile rubber (A) used in the present invention can be produced by copolymerizing the above-mentioned monomers which form the nitrile rubber (A). The method of copolymerizing the monomers is not particularly limited, but, for example, the emulsion polymerization method using sodium dodecylbenzene sulfonate or other emulsifying agent to obtain a latex of a copolymer which has an approximately 50 to 1000 nm average particle size, the suspension polymerization method which using a polyvinyl alcohol or other dispersant to obtain an aqueous dispersion of a copolymer which has an approximately 0.2 to 200 µm average particle size (including also microsuspension polymerization method) may be suitably used. Among these as well, since control of the polymerization reaction is easy, the emulsion polymerization method is more preferable.

The emulsion polymerization method is preferably performed by the following procedure.

Note that, below, suitably, an α,β-ethylenically unsaturated nitrile monomer will be referred to as the "monomer (m1)", a conjugated diene monomer will be referred to as the "monomer (m2)", and a monomer which forms cationic monomer units will be referred to as a "monomer (m3)".

That is, the method of emulsion polymerizing a monomer mixture which is comprised of the monomer (m1) 20 to 80 wt%, preferably 30 to 75 wt%, more preferably 40 to 70 wt%, the monomer (m2) 20 to 80 wt%, preferably 24.9 to 69.9 wt%, more preferably 29.7 to 59.7 wt%, and the monomer (m3) 0 to 30 wt%, preferably 0.1 to 20 wt%, particularly preferably 0.3 to 10 wt% (however, the total of the monomer (m1), monomer (m2), and monomer (m3) being 100 wt%), stopping the polymerization reaction at the point of time when the polymer conversion rate is preferably 50 to 95 wt%, then removing the unreacted monomers as desired is preferable.

If the amount of use of the monomer (m1) used for the emulsion polymerization method is too small, the obtained cross-linked rubber deteriorates in oil resistance and therefore deteriorates in gasoline permeation resistance. On the other hand, if the amount of use of the monomer (m1) is too large, it tends to deteriorate in cold resistance. If the amount of use of the monomer (m2) is too small, the obtained cross-linked rubber deteriorates in cold resistance, while if the amount of use of the monomer (m2) is too large, the obtained cross-linked rubber tends to deteriorate in gasoline permeation resistance. Further, by using the monomer (m3) in the above-mentioned range, the obtained cross-linked rubber can be further improved in gasoline permeation resistance.

Note that, if the polymer conversion rate for stopping the polymerization reaction is too low, recovery of the unreacted monomers becomes extremely difficult. On the other hand, if too high, the obtained cross-linked rubber deteriorates in normal physical properties.

When performing emulsion polymerization, an emulsifying agent, polymerization initiator, secondary polymerization materials, etc. which are conventionally known in the field of emulsion polymerization may be suitably used. The polymerization temperature and the polymerization time may also be suitably adjusted.

Further, it is also possible to use the entire amounts of the monomers (m1) to (m3) which are used for the emulsion polymerization to start the polymerization reaction, but from the viewpoint of controlling the distribution of composition of the monomers units of the copolymer which is formed and obtain cross-linked rubber richer in rubber elasticity, it is preferable to use parts of the entire amounts of the monomers (m1) to (m3) which are used for the emulsion polymerization to start the polymerization reaction and, after that, add the remains of the monomers (m1) to (m3) which are used for the emulsion polymerization at a stage in the middle of the reaction to continue the polymerization reaction. This is because if ending up causing the entire amounts of the monomers (m1) to (m3) which are used for the emulsion polymerization to react from the time of start of the polymerization reaction, the distribution of composition of the copolymer will end up becoming broader.

In this case, it is preferable to charge into the reactor a monomer mixture which is comprised of preferably 10 to 100 wt% of the monomer (m1) which is used for the polymerization, more preferably 20 to 100 wt%, particularly preferably 30 to 100 wt%, preferably 5 to 90 wt% of the monomer (m2) which is used for the polymerization, more preferably 10 to 80 wt%, particularly preferably 15 to 70 wt%, and preferably 0 to 100 wt% of the monomer (m3) which is used for the polymerization, more preferably 30 to 100 wt%, particularly preferably 70 to 100 wt% to start the polymerization reaction, then add the remains of the monomers when the polymer conversion rate with respect to the monomer mixture which is charged into the reactor is preferably 5 to 80 wt% in range so as to continue the polymerization reaction. Note that, even if not using the monomers (m3), among the monomer (m1) and the monomer (m2) which are used for the polymerization, it is preferable to use the above-mentioned amounts to start the polymerization reaction and then add the remains of the monomer (m1) and monomer (m2) to the reactor for the polymerization.

The method of adding the remaining monomers is not particularly limited. They may be added all together, may be added in batches, or may be added continuously. In the present invention, from the viewpoint of enabling easilly control of the distribution of composition of the obtained copolymer, it is preferable to add the remains of the monomers in batches and is particularly preferable to add it divided into one to six batches. If adding the remains of the monomers in batches, the amounts of monomers added in batches and the timings of addition of the batches may be adjusted in accordance with the progress in the polymerization reaction so as to obtain the desired nitrile rubber (A).

After the end of the polymerization reaction, if desired, heating distillation, vacuum distillation, steam distillation, or other known method may be used to remove the unreacted monomers to thereby obtain a latex of the nitrile rubber (A). In the present invention, the latex of the nitrile rubber (A) which is obtained by the emulsion polymerization method has a solid content concentration of preferably 5 to 70 wt%, more preferably 10 to 60 wt%, particularly preferably 15 to 50 wt%.

Note that, the nitrile rubber (A) used in the present invention may also be a hydrogenated nitrile rubber obtained by hydrogenating (hydrogen addition reaction) at least part of the conjugated diene monomer units of the copolymer which is obtained by copolymerization in the above manner. Note that, in the present invention, the conjugated diene monomer units are considered to include units having structures in which conjugated diene monomer units are hydrogenated (saturated conjugated diene monomers units). The method of hydrogenation is not particularly limited, but a known method may be employed. When making the nitrile rubber (A) a hydrogenated nitrile rubber, its iodine value is preferably 0 to 70 in range, more preferably 4 to 60 in range. By hydrogenating the nitrile rubber (A) to obtain hydrogenated nitrile rubber, it is possible to improve the heat resistance, weather resistance and ozone resistance.

### Layered Inorganic Filler (B)

To impart excellent gasoline permeation resistance and cold resistance to the obtained cross-linked rubber, the nitrile rubber composition of the present invention contains a layered inorganic filler (B) with a surface area particle size distribution where a) a median size (d50) of the cumulative surface area distribution is 0.20 µm to 6.0 µm and b) d90-d10 of the cumulative surface area distribution is 1.1 µm or more in a ratio of 1 to 100 parts by weight with respect to 100 parts by weight of the nitrile rubber (A).

The layered inorganic filler (B) is an inorganic compound with an aspect ratio of 30 to 2000 and is a flat plate-shaped inorganic filler. If the aspect ratio is too small, the obtained cross-linked rubber ends up deteriorating in gasoline permeation resistance. On the other hand, if the aspect ratio is too large, dispersion in the nitrile rubber composition becomes difficult and the cross-linked rubber ends up falling in mechanical strength. The aspect ratio of the layered inorganic filler (B) is preferably 40 to 1,000, particularly preferably 50 to 500.

The aspect ratio of the layered inorganic filler (B) can be calculated by finding the ratio of the planar average size and average thickness of the primary particles of the layered inorganic filler (B). Here, the planar average size and average thickness are values of number averages which are obtained by measuring the sizes in the planar direction and thicknesses of 100 particles of the layered inorganic filler (B) which have been randomly selected by an interatomic microscope and calculating the arithmetic averages.

The layered inorganic filler (B) used in the present invention is not particularly limited. It may be a naturally derived one, may be a natural one which is refined and otherwise treated, and may be a synthetic one. As specific examples, kaolinite and halloysite and other kaolinites; montmorillonite, beidellite, nontronite, saponite, hectorite, stevensite, mica, and other smectites; vermiculites; chlorines; talc; E glass or C glass and other amorphous plate-shaped particles comprised of glass flakes may be mentioned. Among these, smectites are preferable, and montmorillonite, mica, and saponite are particularly preferable. These may be used as single types alone or as a plurality of types combined. Note that, montmorillonite, mica, and saponite are multilayer structures which have exchangeable positive ions between layers, so if the above-mentioned nitrile rubber (A) has cationic monomer units, it has excellent dispersability in the nitrile rubber (A).

Here, among the types mentioned above, montmorillonite is contained as a main ingredient in bentonite. Therefore, as montmorillonite, it is possible to use one which is obtained by refining bentonite.

The layered inorganic filler (B) used in the present invention is a layered inorganic filler (B) with a surface area particle size distribution where a) a median size (d50) of the cumulative surface area distribution is 0.20 µm to 6.0 µm and b) d90-d10 of the cumulative surface area distribution is 1.1 µm or more. Here, the surface area particle size distribution of the layered inorganic filler (B) is found using a laser diffraction/scattering particle size measuring device.

Note that, the "a) a median size (d50) of the cumulative surface area distribution" shows the particle size (µm) where the cumulative surface area distribution (%) (ordinate at right side of FIG. 1) is 50% when using a laser diffraction/scattering particle size measuring device (for example, product name: "LS230" made by Beckman Coulter) to measure the surface area particle size distribution and, as shown in FIG. 1, plotting the value of the volume particle size (µm) converted to a log to the base 10 (log₁₀) on the abscissa and plotting the cumulative surface area distribution (%) on the ordinate. Here, the "cumulative surface area distribution (%)" is the distribution obtained by finding the value of the "number of particles of each volume particle size" times the "surface area of the particles" (the product being referred to as "P") integrated for all volume particle sizes (this value being designated as "Q") and normalizing it so that the total of the values of P/Q in all particle sizes becomes 100 (%).

Note that, the "volume particle size (µm)" is the particle size which is found by the laser diffraction/scattering method. It is calculated by irradiating a laser beam at an aqueous dispersion of the layered inorganic filler and processing the spatial strength distribution of the obtained diffracted/scattered light based on the Mie Scattering Theory.

Further, the "b) d90-d10 of the cumulative surface area distribution" shows the distributed dispersion of the layered inorganic filler in the surface area particle size distribution which is found in the same way as the above. Here, d90, as shown in FIG. 1, shows the particle size (µm) where the cumulative value (ordinate at right side of FIG. 1) is 90% when plotting the value of the volume particle size (µm) converted to a log to the base 10 (log₁₀) on the abscissa and plotting the cumulative surface area distribution (%) on the ordinate. In the same way, d10, as shown in FIG. 1, shows the particle size (µm) where the cumulative value (ordinate at right side of FIG. 1) is 10% when plotting the value of the volume particle size (µm) converted to a log to the base 10 (log₁₀) on the abscissa and plotting the cumulative surface area distribution (%) on the ordinate. Further, "d90-d10" is the value of d90 minus the value of d10. If "d90-d10" is large, it means the distributed dispersion of the layered inorganic filler is broad, while if "d90-d10" is small, it means the distributed dispersion of the layered inorganic filler is narrow.

If the "a) a median size (d50) of the cumulative surface area distribution" of the layered inorganic filler is less than 0.20 µm, the ratio of fine particles is high, so the contact surface with the nitrile rubber (A) becomes large, and the interaction becomes stronger, the molecular mobility of the nitrile rubber (A) is restricted, and the obtained cross-linked rubber falls in elongation and deteriorates in cold resistance.

Further, if the "a) a median size (d50) of the cumulative surface area distribution" of the layered inorganic filler is over 6.0 µm, the ratio of coarse particles is high, so the obtained cross-linked rubber deteriorates in gasoline permeation resistance.

If the "b) d90-d10 of the cumulative surface area distribution" of the layered inorganic filler is less than 1.1 µm, the ratio of fine particles is high, so the contact surface with the nitrile rubber (A) becomes large, and the interaction becomes stronger, the molecular mobility of the nitrile rubber (A) is restricted, and the obtained cross-linked rubber falls in elongation and deteriorates in cold resistance.

The "a) a median size (d50) of the cumulative surface area distribution" of the layered inorganic filler (B) is preferably 0.20 to 5.0 µm, particularly preferably 0.20 to 4.5 µm, since the advantageous effects of the present invention become more remarkable.

Further, the "b) d90-d10 of the cumulative surface area distribution" of the layered inorganic filler (B) is preferably 1.1 to 60.0 µm, more preferably 1.1 to 30.0 µm, since the advantageous effects of the present invention become more remarkable.

The volume average particle size of the layered inorganic filler (B) which is measured by a laser diffraction/scattering particle size measurement device is preferably 0.6 to 80 µm, more preferably 0.7 to 60 µm, furthermore preferably 0.8 to 40 µm.

The method of obtaining the aqueous dispersion (C) of the layered inorganic filler (B) used in the present invention is preferably to agitate the layered inorganic filler together with sodium polyacrylate and other dispersant in water to produce the primary dispersion (X) of the layered inorganic filler, next to use a wet-type disperser to make the layered inorganic filler which is contained in the primary dispersion (X) disperse in the water until the layered inorganic filler becomes to have the above-mentioned predetermined surface area particle size distribution. As the wet-type disperser used in this case, a product name "Super Wing Mill DM-200" (made by ESTEC Inc.), product name "Clearmix" (made by M Technique), product name "Fine Flow Mill", product name "Milder", product name "Cavitron", product name "Sharp Flow Mill" (Pacific Machinery & Engineering Co., Ltd.), product name "In-Line Powder Dissolution Device" (made by Noritake Co., Ltd.), product name "High Shear Mixer", product name "Colloid Mill", product name "Cone Mill", solid-liquid mixer (made by IKA Japan), product name "bottom Vortex Disperser" (made by Unozawa-Gumi Iron Works, Ltd.) and product name "Homodisper" (made by Primix Corporation) may be mentioned, but it is also possible to use other dispersion machines of course so long as similar effects are obtained. Among these as well, since they are able to render the surface area particle size distribution of the layered inorganic filler in the obtained aqueous dispersion a predetermined range simply and in a short time, it is particularly preferable to use a product name "Homodisper" (made by Primix Corporation) or product name "bottom Vortex Disperser" (made by Unozawa-Gumi Iron Works, Ltd.) or other wet-type disperser with variable speed blades used for dispersion.

In the above-mentioned method, the primary dispersion (X) of the layered inorganic filler preferably contains 1 to 20 parts by weight sodium polyacrylate or other dispersant and 500 to 5000 parts by weight water with respect to 100 parts by weight of the layered inorganic filler.

Further, when using a wet-type disperser with variable speed blades so as to disperse the layered organic filler in the primary dispersion (X) of the layered inorganic filler and obtain an aqueous dispersion (C) of the layered inorganic filler (B), the speed is preferably 500 to 8000 rpm and the treatment time is preferably 15 minutes to 180 minutes.

If the speed of the wet-type disperser is too small, the "a) a median size (d50) of the cumulative surface area distribution" of the layered inorganic filler tends to become too large, while if the speed of the wet-type disperser is too large, the "a) a median size (d50) of the cumulative surface area distribution" of the layered inorganic filler tends to become too small.

Further, if the treatment time by the wet-type disperser is too short, the "a) a median size (d50) of the cumulative surface area distribution" of the layered inorganic filler tends to become too large, while if the treatment time by the wet-type disperser is too long, the "a) a median size (d50) of the cumulative surface area distribution" of the layered inorganic filler tends to become too small.

Further, the preparation temperature of the primary dispersion (X) of the layered inorganic filler and the temperature when using a wet-type disperser are preferably 5 to 90°C.

Further, the primary dispersion (X) of the layered inorganic filler has a viscosity of preferably 10 to 10,000 mPa.s (cP). By treatment by the above-mentioned range of conditions, an aqueous dispersion (C) of the layered inorganic filler (B) having a predetermined surface area particle size distribution is easily obtained.

The content ratio of the layered inorganic filler (B) is 1 to 100 parts by weight with respect to 100 parts by weight of the nitrile rubber (A), preferably 3 to 70 parts by weight, more preferably 5 to 40 parts by weight. If the content of the layered inorganic filler (B) is too small, the gasoline permeation resistance and normal physical properties deteriorate. On the other hand, if the content of the layered inorganic filler (B) is too large, the obtained cross-linked rubber tends to fall in elongation.

### Thermoplastic Resin

The nitrile rubber composition of the present invention may include, in addition to nitrile rubber (A), another rubber or resin and other polymer in a range not impairing the advantageous effects of the present invention, but further inclusion of at least one type of thermoplastic resin which is selected from the group comprising a vinyl chloride resin and an acrylic resin is preferable. By including at least one type of thermoplastic resin which is selected from the group comprising a vinyl chloride resin and an acrylic resin, when made into a cross-linked rubber, it can be made into one in which the ozone resistance is much further improved.

The vinyl chloride resin used in the present invention is one in which the main constituent monomer forming the resin is vinyl chloride, and the content of the monomer units is preferably 50 to 100 wt%, more preferably 60 to 100 wt%, particularly preferably 70 to 100 wt%.

Further, in the acrylic resin used in the present invention is one in which the main constituent monomer forming the resin is a (meth)acrylic acid alkyl ester, the content of the monomer units is preferably 50 to 100 wt%, more preferably 60 to 100 wt%, particularly preferably 70 to 100 wt%. Note that, the (meth)acrylic acid alkyl ester preferably has an alkyl group with 1 to 20 carbon atoms, more preferably 1 to 18, particularly preferably 1 to 10.

These thermoplastic resins are preferably granular in shape. Their volume average particle size is preferably 0.01 µm to 1 mm, more preferably 0.05 to 100 µm, particularly preferably 0.1 to 10 µm. The volume average particle size is measured by a laser diffraction/scattering particle size measuring device. If the thermoplastic resin is too small in volume average particle size, the cross-linked rubber is liable to fall in ozone resistance, while conversely if too large, it may suffer from poor dispersion at the time of kneading.

Further, the thermoplastic resin preferably has a Tg (glass transition termperature measured by differential scan calorimetry (DSC)) of 50 to 180 °C, particularly preferably 60 to 150°C.

The vinyl chloride resin and acrylic resin are not particularly limited in polymerization degree or molecular weight, but with the vinyl chloride resin, the average polymerization degree which is measured by the solution viscosity method prescribed in JIS K 6721 is preferably 400 to 3,000, more preferably 600 to 2,000. With the acrylic resin, the number average molecular weight converted to standard polystyrene which is measured by gel permeation chromatography (GPC) using tetrahydrofuran as a solvent is preferably 10,000 to 7,000,000, more preferably 100,000 to 2,000,000.

If the polymerization degree or molecular weight is too small, the obtained cross-linked rubber is liable to deteriorate in ozone resistance, while conversely if too large, it sometimes becomes inferior in shapeability.

The content in the case of including at least one type of thermoplastic resin which is selected from the group consisting of a vinyl chloride resin and an acrylic resin is preferably 1 to 150 parts by weight with respect to 100 parts by weight of the nitrile rubber (A), more preferably 10 to 120 parts by weight, furthermore preferably 20 to 100 parts by weight, particularly preferably 40 to 90 parts by weight. If the content of the at least one type of thermoplastic resin which is selected from the group consisting of an acrylic resin and vinyl chloride resin is too small, the effect of addition becomes hard to obtain. On the other hand, if too large, the cold resistance is liable to deteriorate.

### Plasticizer

The nitrile rubber composition of the present invention preferably contains a plasticizer. If using as the plasticizer a plasticizer with an SP value (solubility parameter) by the HOY method of 8.0 to 10.2 (cal/cm³)^{1/2}, the obtained cross-linked rubber becomes excellent in gasoline permeation resistance, the embrittlement temperature falls, and the cold resistance also becomes excellent.

As specific examples of such a plasticizer (units of SP value: "(cal/cm³)^{1/2}"), for example, dibutoxyethyl adipate (SP value: 8.8), di(butoxyethoxyethyl) adipate (SP value: 9.2),
di(methoxytetraethyleneglycol) adipate, di(methoxypentaethyleneglycol) adipate, (methoxytetraethyleneglycol) (methoxypentaethyleneglycol) adipate, and other ester compounds of adipic acid and an ether bond-containing alcohol; dibutoxyethyl azelate, di(butoxyethoxyethyl) azelate, and other ester compounds of azelaic acid and an ether bond-containing alcohol; dibutoxyethyl sebacate, di(butoxyethoxyethyl) sebacate, and other ester compounds of sebacic acid and an ether bond-containing alcohol; dibutoxyethyl phthalate, di(butoxyethoxyethyl) phthalate, and other ester compounds of phthalic acid and an ether bond-containing alcohol; dibutoxyethyl isophthalate, di(butoxyethoxyethyl) isophthalate, and other ester compounds of isophthalic acid and an ether bond-containing alcohol; di-(2-ethylhexyl) adipate (SP value: 8.5), diisodecyl adipate (SP value: 8.3), diisononyl adipate, dibutyl adipate (SP value: 8.9), and other adipic acid dialkyl esters; di-(2-ethylhexyl) azelate (SP value: 8.5), diisooctyl azelate, di-n-hexyl azelate, and other azelaic acid dialkyl esters; di-n-butyl sebacate (SP value: 8.7), di-(2-ethylhexyl) sebacate (SP value: 8.4), and other sebacic acid dialkyl esters; dibutyl phthalate (SP value: 9.4), di-(2-ethylhexyl) phthalate (SP value: 9.0), di-n-octyl phthalate, diisobutyl phthalate, diheptyl phthalate (SP value: 9.0), diisodecyl phthalate (SP value: 8.5), diundecyl phthalate (SP value: 8.5), diisononyl phthalate (SP value: 8.9), and other phthalic acid dialkyl esters; dicyclohexyl phthalate, and other phthalic acid dicycloalkyl esters; diphenyl phthalate, butylbenzyl phthalate (SP value: 10.2), and other phthalic acid arylesters; di-(2-ethylhexyl) isophthalate, diisooctyl isophthalate, and other isophthalic acid dialkyl esters; di-(2-ethylhexyl) tetrahydrophthalate, di-n-octyl tetrahydrophthalate, diisodecyl tetrahydrophthalate, and other tetrahydrophthalic acid dialkyl esters; tri-(2-ethylhexyl) trimellitate (SP value: 8.9), tri-n-octyl trimellitate (SP value: 8.9), triisodecyl trimellitate (SP value: 8.4), triisooctyl trimellitate, tri-n-hexyl trimellitate, triisononyl trimellitate (SP value: 8.8), triisodecyl trimellitate (SP value: 8.8), and other trimellitic acid derivatives; epoxylated soybean oil (SP value: 9.0), epoxylated linseed oil (SP value: 9.3), and other epoxy-based plasticizers; tricresyl diphosphate (SP value: 9.7), and other phosphoric acid ester-based plasticizers may be mentioned. These may be used as single types alone or as a plurality of types combined.

Among these as well, since the obtained cross-linked product can be made excellent in gasoline permeation resistance and cold resistance, ester compounds of dibasic acids, such as adipic acid, azelaic acid, sebacic acid and phthalic acid, and ether bond-containing alcohols are preferable, ester compounds of adipic acid and ether bond-containing alcohols are more preferable, and di(butoxyethoxyethyl) adipate is particularly preferable.

The content ratio of the plasticizer in the nitrile rubber composition of the present invention is preferably 0.1 to 200 parts by weight with respect to 100 parts by weight of the nitrile rubber (A), more preferably 5 to 150 parts by weight, particularly preferably 10 to 60 parts by weight. If the content of the plasticizer is in the above-mentioned range, it is possible to prevent bleeding and the advantageous effects of the present invention become further remarkable.

The nitrile rubber composition of the present invention may, in accordance with need, also have blended into it compounding agents which are used for general rubber such as a cross-linking retardant, reinforcing agent, filler other than the layered inorganic filler (B), anti-aging agent, slip agent, tackifier, lubricant, processing aid, flame retardant, antifungal agent, anti-static agent, coloring agent, and other additives.

As the anti-aging agent, a phenol-based, amine-based, benzimidazole-based, phosphoric acid-based, or other anti-aging agent may be used. In phenol-based ones, 2,2'-methylene bis(4-methyl-6-t-butylphenol) may be mentioned, in amine-based ones, 4,4'-bis(α, α-dimethylbenzyl)diphenylamine and N-isopropyl-N'-phenyl-p-phenylenediamine may be mentioned, in benzimidazole-based ones, 2-mercaptobenzimidazole may be mentioned. These may be used as single types alone or as two types or more combined.

As the filler other than the inorganic filler (B), for example, carbon black or silica, calcium carbonate, aluminum silicate, magnesium silicate, calcium silicate, magnesium oxide, zinc (meth)acrylate, magnesium (meth)acrylate, and other α,β-ethylene-based unsaturated carboxylic acid metal salts may be mentioned. These fillers may be treated by coupling treatment by a silane coupling agent or titanium coupling agent or may be treated by surface modification by a higher fatty acid or its metal salt, ester, amide or other higher fatty acid derivative or surfactant.

Further, the nitrile rubber composition of the present invention may contain a rubber other than the nitrile rubber (A) in a range not impairing the advantageous effects of the present invention. The rubber other than the nitrile rubber (A) is not particularly limited, but an acrylic rubber, ethylene-acrylic acid copolymer rubber, fluororubber, styrene-butadiene copolymer rubber, ethylene-propylene copolymer rubber, ethylene-propylene-diene ternary copolymer rubber, epichlorohydrin rubber, urethane rubber, chloroprene rubber, ethylene-vinyl acetate copolymer, chlorosulfonated polyethylene, natural rubber or polyisoprene rubber may be mentioned. Note that, the amount when blending in a rubber other than the nitrile rubber (A) is preferably 100 parts by weight or less with respect to 100 parts by weight of the nitrile rubber (A), more preferably 50 parts by weight or less, furthermore preferably 30 parts by weight or less, particularly preferably 10 parts by weight or less, so as not to impair the excellent oil resistance and normal physical properties of the nitrile rubber (A).

### Method of Production of Nitrile Rubber Composition

The method of production of the nitrile rubber composition of the present invention is not particularly limited, but it is preferable to mix a latex of nitrile rubber (A) which contains 20 to 80 wt% of α,β-ethylenically unsaturated nitrile monomer units, 20 to 80 wt% of conjugated diene monomer units which may be at least partially hydrogenated and 0 to 30 wt% of cationic monomer units and an aqueous dispersion (C) of the layered inorganic filler (B) with a surface area particle size distribution wherein a) a median size (d50) of the cumulative surface area distribution is 0.20 µm to 6.0 µm and b) d90-d10 of the cumulative surface area distribution is 1.1 µm or more in a weight ratio giving a ratio of the layered inorganic filler (B) with respect to 100 parts by weight of the nitrile rubber (A) of 1 to 100 parts by weight, then cause the obtained mixture to coagulate to make it form crumbs, then dry the same.

As the latex of the nitrile rubber (A), one which is obtained by the above-mentioned emulsion polymerization may be used.

Further, as the aqueous dispersion (C) of the layered inorganic filler (B), it is sufficient to use an aqueous dispersion (C) of the inorganic filler (B) which is obtained as explained above by producing a primary dispersion (X) of the layered inorganic filler, then treating this using a wet-type disperser.

In the method of production of the present invention, the latex of the above-mentioned nitrile rubber (A) and the aqueous dispersion (C) of the layered inorganic filler (B) are mixed by a weight ratio giving a ratio of the layered inorganic filler (B) with respect to 100 parts by weight of the nitrile rubber (A) of 1 to 100 parts by weight to obtain a latex composition. This latex composition is brought into contact with a coagulating solution which contains a coagulant so as to make it coagulate and produce crumbs. These are filtered, washed, then dried to obtain the nitrile rubber composition of the present invention which contains the nitrile rubber (A) and the layered inorganic filler (B). If adopting this method, the nitrile rubber (A) and the layered inorganic filler (B) are uniformly mixed in terms of microstructure and cross-linked rubber which is excellent in gasoline permeation resistance and normal physical properties is easily obtained.

Note that, the primary dispersion (X) of the layered inorganic filler has to be made a predetermined surface area particle size distribution (that is, made an aqueous dispersion (C) of the layered inorganic filler (B)) before being mixed with the latex of the nitrile rubber (A). If mixing the latex of the nitrile rubber (A) and the primary dispersion (X) of the layered inorganic filler, then trying to make the inorganic filler which is contained in that mixture a predetermined surface area particle size distribution using a wet-type disperser, coagulum will be formed in the latex of the nitrile rubber (A) or the obtained cross-linked rubber will become smaller in elongation and deteriorate in cold resistance.

If the nitrile rubber composition contains a plasticizer, it is sufficient to add and mix a plasticizer as an aqueous emulsion to the latex composition. If adopting this method, the nitrile rubber (A), layered inorganic filler (B), and plasticizer are uniformly mixed in microstructure, bleeding of the plasticizer becomes hard to occur, and cross-linked rubber which is excellent in cold resistance as well is easily obtained.

The method of preparing the aqueous emulsion of the plasticizer is not particularly limited, but it is preferable to strongly agitate an aqueous medium which contains a surfactant in the amount of 0.5 to 10 wt% of the plasticizer while adding the plasticizer. As the surfactant, potassium rosinate, sodium laurosulfate, potassium oleate, sodium dodecylbenzene sulfonate, and other anionic surfactants; polyoxyethylenealkyl ether, polyoxyethylenealkyl ester, polyoxyethylene sorbitan alkyl ester, and other nonionic surfactants; didecyldimethyl ammonium chloride, stearyltrimethyl ammonium chloride, and other cationic surfactants may be mentioned. Note that, the concentration of plasticizer in the aqueous emulsion is preferably 5 to 70 wt%.

The method of coagulation of the latex composition is not particularly limited. Salting out coagulation or other known method is applied. Among these, it is preferable to add the latex composition to an aqueous solution which contains a coagulant so as to cause salting out. As the coagulant, calcium chloride, sodium chloride, calcium hydroxide, aluminum sulfate, aluminum hydroxide, etc. may be mentioned. The amount of the coagulant used is preferably 0.5 to 150 parts by weight with respect to 100 parts by weight of the nitrile rubber (A), particularly preferably 0.5 to 20 parts by weight.

Here, if the nitrile rubber (A) contains cationic monomer units, when salting out the latex composition, it is preferable to add a dilute sulfuric acid aqueous solution to control the pH of the coagulant aqueous solution to the isoelectric point of the latex composition of the nitrile rubber (A) or less. By controlling the pH of the coagulant aqueous solution, the zeta potential of the functional groups of the cationic monomer units which are contained in the nitrile rubber (A) rises and, due to this, the dispersability of the layered inorganic filler (B) is improved and the crumbs which are obtained by coagulation can be made larger in particle size.

The particle size of the crumbs has a great effect on the dehydration degree at the vibrating screen and squeezer after the coagulation and washing processes, the crumb recovery rate, and the dryness in the drying process, so the crumbs have an average particle size of preferably 0.5 to 40 mm. The methods of washing, dehydrating, and drying the crumbs are similar to the washing and dehydrating methods and drying method in the production of general rubber. As the washing and dehydrating methods, a mesh type filter or centrifugal separator may be used to separate the crumbs obtained by coagulation and water, then the crumbs may be washed and dehydrated by a squeezer. Next, a band dryer, air circulation vertical dryer, single-screw extruder or twin-screw extruder which are generally used for production of rubber may be used to dry the crumbs to a desired water content and thereby obtain the nitrile rubber composition of the present invention. Further, in the twin-screw extruder, coagulation and drying may be simultaneously performed.

When the nitrile rubber composition of the present invention is made to include at least one type of thermoplastic resin which is selected from the group consisting of a vinyl chloride resin and acrylic resin, a latex state vinyl chloride resin or acrylic resin which is produced by the conventionally known emulsion polymerization method may be mixed (latex blend) with the latex composition which includes the layered inorganic filler (B) which was prepared as explained above.

Further, the rubber composition which is obtained by making the latex composition (which may contain the plasticizer, vinyl chloride resin, acrylic resin, etc.) coagulate to make it form crumbs and drying the same may, in accordance with need, have an anti-aging agent, reinforcing agent, or other ingredient added to it and kneaded with it by a roll or Banbury mixer or other kneader so as to prepare the nitrile rubber composition of the present invention.

Note that, as the method of preparation of the nitrile rubber composition of the present invention, in addition to the above-mentioned method, for example, it is also possible to introduce into the latex of the nitrile rubber (A) the layered inorganic filler (B) and the total amount or part of all of one or more of the plasticizer, vinyl chloride resin, acrylic resin, and other ingredients which are added in accordance with need, coagulate and dry the mixture, then knead in the filler other than the layered inorganic filler (B), anti-aging agent, reinforcing agent, and other ingredients which are added in accordance with need together with the remains of the above-mentioned ingredients by a roll or Banbury mixer or other kneader.

### Cross-Linkable Nitrile Rubber Composition

The cross-linkable nitrile rubber composition of the present invention includes the nitrile rubber composition of the present invention and a cross-linking agent. As the cross-linking agent, a sulfur-based cross-linking gent and organic peroxide cross-linking agent may be mentioned. These may be used as single types alone or as a plurality of types combined, but use of a sulfur-based cross-linking agent is preferable.

As the sulfur-based cross-linking agent, powdered sulfur, flowers of sulfur, precipitated sulfur, colloidal sulfur, surface-treated sulfur, insoluble sulfur, and other sulfur; sulfur chloride, sulfur dichloride, morpholin disulfide, alkylphenol disulfide, dibenzothiazyl disulfide, N,N'-dithio-bis(hexahydro-2H-azenopin-2), phosphorus-containing polysulfide, high molecular weight polysulfide, and other sulfur-containing compounds; tetramethylthiuram disulfide, selenium dimethyldithiocarbamate, 2-(4'-morpholinodithio)benzothiazole, and other sulfur-donor compounds may be mentioned. These may be used as single types alone or as a plurality of types combined.

As the organic peroxide cross-linking agent, dicumyl peroxide, cumene hydroperoxide, t-butylcumyl peroxide, p-menthane hydroperoxide, di-t-butylperoxide, 1,3-bis(t-butylperoxyisopropyl)benzene, 1,4-bis(t-butylperoxyisopropyl)benzene, 1,1-di-t-butylperoxy-3,3-trimethylcyclohexane, 4,4-bis-(t-butyl-peroxy)-n-butyl valerate, 2,5-dimethyl-2,5-di-t-butylperoxyhexane, 2,5-dimethyl-2,5-di-t-butylperoxyhexine-3, 1,1-di-t-butylperoxy-3,5,5-trimethylcyclohexane, p-chlorobenzoyl peroxide, t-butylperoxyisopropyl carbonate and t-butylperoxy benzoate may be mentioned. These may be used as single types alone or as a plurality of types combined.

The content of the cross-linking agent in the cross-linkable nitrile rubber composition which is formed using the nitrile rubber composition of the present invention is not particularly limited, but is preferably 0.1 to 10 parts by weight with respect to 100 parts by weight of the nitrile rubber (A), more preferably 0.2 to 5 parts by weight.

When using the sulfur-based cross-linking agent, Zinc White, stearic acid, and other cross-linking aid; guanidine-based, aldehyde-amine-based, aldehyde-ammonia-based, thiazole-based, sulfenamide-based, thiourea-based, and other cross-linking accelerators; may be jointly used. The amounts of use of these cross-linking aids and cross-linking accelerators are not particularly limited, but are preferably 0.1 to 10 parts by weight in range with respect to 100 parts by weight of the nitrile rubber (A).

When using an organic peroxide cross-linking agent, as the cross-linking aid, trimethylolpropane trimethacrylate, divinylbenzene, ethylene dimethacrylate, triallyl isocyanulate, and other polyfunctional monomers may be jointly used. The amount of use of these cross-linking aids is not particularly limited, but is preferably 0.5 to 20 parts by weight in range with respect to 100 parts by weight of the nitrile rubber (A).

Further, the cross-linkable nitrile rubber composition which is formed using the nitrile rubber composition of the present invention may also have blended into it, in accordance with need, a compounding agent which is used for general rubber, for example, a cross-linking retardant, reinforcing agent, a filler other than the layered inorganic filler (B), anti-aging agent, slip agent, tackifier, lubricant, processing aid, flame retardant, antifungal agent, anti-static agent, coloring agent, coupling agent, and other additives. Note that, the specific examples of the anti-aging agent and filler other than the layered inorganic filler (B) are similar to those explained above.

The method of preparation of the cross-linkable nitrile rubber composition of the present invention is not particularly limited, but it is sufficient to add the cross-linking agent, cross-linking aid, and the other compounding agents to the nitrile rubber composition which is obtained by the above-mentioned method and knead it by a roll or Banbury mixer or other kneader.

Note that, in this case, the order of blending is not particularly limited, but it is sufficient to fully mix in the ingredients which are resistant to reaction and decomposition under heat, then mix in the ingredients which easy decompose under heat (cross-linking agent, cross-linking accelerator, etc.) at a temperature at which decomposition does not occur and in a short time.

The cross-linkable nitrile rubber composition of the present invention has a Mooney viscosity (below, sometimes referred to as the "compound Mooney viscosity") (ML₁₊₄, 100°C) of preferably 5 to 300, more preferably 10 to 250.

### Cross-Linked Rubber

The cross-linked rubber of the present invention is obtained by cross-linking the above-mentioned cross-linkable nitrile rubber composition.

When cross-linking the cross-linkable nitrile rubber composition, a shaping machine corresponding to the shape of the shaped article (cross-linked rubber) being produced, for example, an extruder, injection molding machine, compressor or rolls is used to shape the composition, then a cross-linking reaction is caused to fix the shape of the cross-linked product. When performing the cross-linking, it is possible to cross-link the composition after the preliminary shaping or cross-link it simultaneously with the shaping. The shaping temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 1 hour.

Depending on the shape or size cross-linked rubber sometimes is not sufficiently cross-linked to the inside part even if the surface is cross-linked, so it may be further heated for secondary cross-linking.

The thus obtained cross-linked rubber of the present invention is a cross-linked product of nitrile rubber which is excellent in gasoline permeation resistance and cold resistance in addition to the inherent properties of nitrile rubber of an excellent oil resistance.

As a result, the nitrile rubber composition, cross-linkable nitrile rubber composition, and their cross-linked products of the present invention are suitable for use in numerous fields such as fuel hoses or fuel seals and, further, can exhibit the effect of being able to reduce the load on the environment by reducing the amount of evaporation of gasoline and other fuel into the atmosphere.

The cross-linked rubber of the present invention is suitably used as a fuel hose by making a hose which is comprised of one or more layers of which at least one layer is comprised of the cross-linked rubber of the present invention. In the case of a two or more layer laminate, the layer which is comprised of the cross-linked rubber of the present invention may be used for either the inside layer, intermediate layer, and outside layer. As the other layers of the laminate, nitrile rubber with a content of α,β-ethylenically unsaturated nitrile monomer units of preferably 5 to 35 wt%, more preferably 18 to 30 wt% and also rubber which contains that nitrile rubber and a vinyl chloride resin or acrylic resin or a fluororubber, chloroprene rubber, hydrin rubber, chlorosulfonated polyethylene rubber, acrylic rubber, ethylene-acrylic acid copolymer, ethylene-propylene copolymer, ethylene-propylene-diene ternary copolymer, butyl rubber, isoprene rubber, natural rubber, styrene-butadiene copolymer, fluororesin, polyamide resin, polyvinyl alcohol, ethylene-vinyl acetate copolymer resin, ethylene-vinyl alcohol copolymer resin, polybutylene naphthalate, polyphenylene sulfide, polyolefin resin or polyester resin may be mentioned. These may be used as single types alone or as a plurality of types combined.

Further, in accordance with need, to bond a layer which is comprised of the cross-linked rubber of the present invention and another layer, it is possible to include tetrabutylphosphonium benzotriazolate, tetraoctylphosphonium benzotriazolate, methyltrioctylphosphonium benzotriazolate, tetrabutylphosphonium tolyltriazolate, tetraoctylphosphonium tolyltriazolate, and other phosphonium salts, 1,8-diazabicyclo(5.4.0)undecene-7 salt (DBU salt) or 1,5-diazabicyclo(4.3.0)-nonene-5 salt (DBN salt) in one or both of the layer which is comprised of the cross-linked rubber of the present invention and another layer.

The method of production of a hose which includes the cross-linked rubber of the present invention having the above-mentioned configuration is not particularly limited, but it is possible to use an extruder to form a tubular shape and then cross-link it so as to produce a hose. The cross-linkable nitrile rubber composition which is formed using the nitrile rubber composition of the present invention has the property of resistance to mandrel cracks, so a mandrel can be used for production. That is, when making a hose a single layer one which is comprised of only the nitrile cross-linked rubber of the present invention, first, the cross-linkable nitrile rubber composition which is formed using the nitrile rubber composition of the present invention is shaped into a tube, a mandrel is inserted into the obtained tubular shaped article to fix the shape, and the cross-linkable nitrile rubber composition is cross-linked.

The cross-linked rubber of the present invention is suitable for packings, gaskets, O-rings, oil seals, and other seal members; oil hoses, fuel hoses, inlet hoses, gas hoses, brake hoses, refrigerant hoses, and other hoses; diaphragms; accumulator bladders; boots; and is particularly suitably used for hoses. As the gas which is transported by the above-mentioned gas hoses, air, nitrogen, oxygen, hydrogen, carbon dioxide, carbon monoxide, methane, ethane, propane, dimethylether, LPG and steam may be mentioned.

### EXAMPLES

Below, examples and comparative examples will be given to specifically explain the present invention, but the present invention is not limited to these examples. Below, unless otherwise indicated, "parts" are based on weight. The tests and methods of evaluation of the physical properties and characteristics are as follows.

### (1) Mooney Viscosity

The Mooney viscosity (polymer Mooney viscosity) (ML₁₊₄, 100°C) of the nitrile rubber (A) was measured in accordance with JIS K 6300.

### (2) Normal Physical Properties (Tensile Strength and Elongation)

The cross-linkable nitrile rubber composition was placed in a vertical 15 cm, horizontal 15 cm, depth 0.2 cm mold and press formed by pressing by 10 MPa at 160°C for 20 minutes to obtain sheet-shaped cross-linked rubber. The obtained sheet-shaped cross-linked rubber was punched to a JIS No. 3 dumbbell shape to prepare a test piece. The tensile strength and elongation of the cross-linked product were measured using these test pieces in accordance with JIS K 6251.

### (3) Gasoline Permeation Resistance

A test use fuel oil CE-20 (volume ratio: isooctane/toluene/ethanol = 40/40/20) was used for measurement of the amount of gasoline permeation by the aluminum cup method. That is, a 100 ml volume aluminum cup (opening part is circular shape of a diameter of 57 mm.) was filled with 50 ml of test use fuel oil CE-20. This was covered by sheet-shaped cross-linked rubber which was cut into a diameter 61 mm disk shape, had a thickness of 2 mm, and was obtained in the same way as the above-mentioned "(2) Normal SPhysical Properties". The obtained sheet-shaped cross-linked rubber was placed over it to cap it, then fasteners were used to adjust the area by which the sheet-shaped cross-linked rubber separated the inside and outside of the aluminum cup to 25.50 cm². The aluminum cup was allowed to stand in a 23 °C constant temperature tank and was measured for weight every 24 hours, whereby the amount of permeation of test use fuel oil for every 24 hours was measured. The gasoline permeation coefficient (units: g·mm/m²·day) was found from the maximum value of that. The smaller the gasoline permeation coefficient, the better the gasoline permeation resistance.

### (4) Embrittlement Temperature

Sheet-shaped cross-linked rubber obtained in the same way as the above-mentioned "(2) Normal Physical Properties" was used to measure the embrittlement temperature (°C) in accordance with JIS K 6261.

### (5) Surface Area Particle Size Distribution and Volume Average Particle Size of Layered Inorganic Filler

The layered inorganic filler was measured for surface area particle size distribution and volume average particle size using a laser diffraction/scattering particle size measuring device (made by Beckman Coulter, product name "LS230"), using pure water to prepare a slurry of the layered inorganic filler of a turbidity of 10%, and using a measurement refractive index of 1.33.

### Production Example 1

### (Production of Latex of Nitrile Rubber (a1))

To a reaction vessel, water 240 parts, acrylonitrile 75.7 parts, 2-vinyl pyridine 2.2 parts, and sodium dodecylbenzene sulfonate (emulsifying agent) 2.5 parts were charged and the temperature was adjusted to 5°C. Next, the gas phase was reduced in pressure to sufficiently degas the system, then 1,3-butadiene 22 parts, a polymerization initiator comprised of p-menthane hydroperoxide 0.06 part, sodium ethylenediamine tetraacetate 0.02 part, ferrous sulfate (7-hydrate) 0.006 part, and sodium formaldehyde sulfoxylate 0.06 part and a chain transfer agent comprised of t-dodecyl mercaptan 1 part were added to start the first stage of reaction of the emulsion polymerization. After the reaction started, when the polymer conversion rate with respect to the charged monomers reached 40 wt% and 60 wt%, the reaction vessel was additionally charged with 1,3-butadiene in respectively 12 parts and 12 parts to perform the second stage and third stage of the polymerization reaction. After that, when the polymer conversion rate with respect to all charged monomers reached 75 wt%, hydroxylamine sulfate 0.3 part and potassium hydroxide 0.2 part were added to make the polymerization reaction stop. After the reaction stopped, the content of the reaction vessel was heated to 70°C and the unreacted monomers were recovered by steam distillation under vacuum to obtain a latex of nitrile rubber (a1) (solid content 24 wt%).

Part of the above-mentioned latex was sampled, coagulated by a large amount of methanol, then filtered and dried to obtain the nitrile rubber (a1). The content ratios of the monomer units which form the obtained nitrile rubber (a1) were measured by ¹H-NMR using an FT-NMR device (product name "JNM-ECA400WB") made by JEOL Ltd., whereby the ratios were acrylonitrile units 50 wt%, 1,3-butadiene units 48 wt%, 2-vinyl pyridine units 2 wt%. Further, the nitrile rubber (a1) had a Mooney viscosity (polymer Mooney viscosity) of 73.

### Production Example 2

### (Production of Latex of Hydrogenated Nitrile Rubber (a2))

Using a latex of the nitrile copolymer rubber (a1) which was obtained in the same way as Production Example 1 and adding a palladium catalyst (solution of mixture of 1 wt% palladium acetate acetone solution and equal weight of ion exchanged water) to the reactor so as to give a content of 1000 ppm of palladium to the dry rubber weight which is contained in the latex, a hydrogen addition reaction was performed at a hydrogen pressure of 3 MPa and a temperature of 50 °C for 6 hours to obtain a hydrogenated latex of nitrile rubber (a2).

The content ratios of the monomer units which form the obtained hydrogenated nitrile rubber (a2) were measured in the same way as Production Example 1, whereby the ratios were acrylonitrile monomer units 50 wt%, total of 1,3-butadiene units and saturated butadiene units 48 wt%, and 2-vinyl pyridine monomer units 2 wt%. Further, the hydrogenated nitrile rubber (a2) had a Mooney viscosity (polymer Mooney viscosity) of 155 and an iodine value (measured according to JIS K 6235) of 23.

### Production Example 3

### (Production of Latex of Vinyl Chloride Resin)

To a pressure resistant reaction container, water 120 parts, sodium lauryl sulfate 0.8 part, and potassium persulfate 0.06 part were charged. The mixture was degassed under reduced pressure two times repeatedly, then vinyl chloride 100 parts was charged. The mixture was agitated while heating it and emulsion polymerized at 47 °C. After the polymer conversion rate reached 90%, the mixture was cooled to room temperature and the unreacted monomers were removed. The concentration of the obtained vinyl chloride resin latex was 41 wt%. The average particle size of the vinyl chloride resin by the centrifugal sedimentation turbidity method was 0.3 µm, the average polymerization degree which was measured by JIS K 6721 was 1,300, and the glass transition temperature was 80°C.

### Production Example 4

### (Production of Latex of Acrylic resin)

To a reactor with a thermometer and agitator, ion exchanged water 150 parts, sodium octylsulfate 2 parts, ammonium persulfate (polymerization initiator) 0.3 part, methyl methacrylate 80 parts, acrylonitrile 20 parts and t-dodecyl mercaptan (molecular weight adjuster) 0.05 part were added. The mixture was agitated while starting the emulsion polymerization at a temperature of 80°C. After 5 hours, the reaction was stopped to obtain a latex. The obtained acrylic resin latex had a concentration of 39 wt% and a polymer conversion rate of 98 wt%. The acrylic resin had an average particle size of 0.2 µm, a number average molecular weight of 600,000, and a glass transition temperature of 103°C.

### Example 1

### (Preparation of Layered Inorganic Filler Aqueous Dispersion)

A layered inorganic filler comprised of refined montmorillonite (product name: "Bengel HVP", made by Houjun Co., Ltd., aspect ratio 285, average primary particle size 0.1 to 2 µm) 100 parts was added to distilled water 1898 parts in the presence of sodium polyacrylate 2 parts. Using product name "Homodisper" (made by Primix Corporation), the mixture was agitated at 7,000 rpm and 30°C for 30 minutes to obtain an aqueous dispersion (b1) of the layered inorganic filler. The surface area particle size distribution and volume average particle size of the layered inorganic filler in the aqueous dispersion (b1) were as described in Table 1.

### (Preparation of Nitrile Rubber Composition)

The latex of the nitrile rubber (a1) which was obtained in Production Example 1 was agitated in the vessel while adding the aqueous dispersion (b1) of the layered inorganic filler which was prepared above to disperse the layered inorganic filler. Note that, the aqueous dispersion (b1) of the layered inorganic filler was added to give the layered inorganic filler 20 parts with respect to 100 parts of the solid content (amount of nitrile rubber) of the latex of the nitrile rubber (a1) and obtain a nitrile rubber latex composition (ab1) of a solid content (nitrile rubber and layered inorganic filler) concentration of 15 wt%.

On the other hand, a plasticizer comprised of di(butoxyethoxyethyl) adipate (product name "ADK Cizer RS-107", made by ADEKA) in a 50 wt% aqueous emulsion was prepared by using a surfactant comprised of potassium oleate in an amount of 2 wt% of the plasticizer and mixing them under strong agitation.

To the above-mentioned nitrile rubber latex composition (ab1), an aqueous solution of di(butoxyethoxyethyl) adipate which was prepared as explained above 20 parts (amount of plasticizer 10 parts) with respect to 100 parts of the nitrile rubber (a1) was added and mixed and dispersed to obtain a latex composition of nitrile rubber (abc1).

The obtained latex composition of nitrile rubber (abc1) was poured into an aqueous solution containing an amount of calcium chloride (coagulant) giving 4 parts by weight with respect to 100 parts by weight of the nitrile rubber (a1) in the latex composition (abc1) under agitation, while adjusting in pH by suitably adding 10% dilute sulfuric acid, to cause coagulation and thereby cause the formation of crumbs comprised of a mixture of the nitrile rubber (a1), layered inorganic filler, and plasticizer.

Further, the obtained crumbs were separated by filtration, rinsed, then dried at 60 °C under reduced pressure to obtain a nitrile rubber composition.

(Preparation of Cross-Linkable Nitrile Rubber Composition and Nitrile Cross-Linked Rubber) Next, a Banbury mixer was used to add and mix into 100 parts of the nitrile rubber (a1) in the nitrile rubber composition, MT carbon black (product name "Thermax Medium Thermal Carbon Black N990", made by CANCARB) 10 parts, a cross-linking aid comprised of Zinc White 5 parts, stearic acid 1 part, and di(butoxyethoxyethyl) adipate (product name "ADK Cizer RS-107", made by ADEKA, plasticizer) 20 parts, at 50°C. Further, this mixture was transferred to a roll where a cross-linking agent comprised of 325# sulfur 0.5 part, tetramethylthiuram disulfide (product name "Noccelar TT", made by Ouchi Shinko Chemical Industrial, cross-linking accelerator) 1.5 parts, and N-cyclohexyl-2-benzothiazolyl sulfenamide (product name "Noccelar CZ", made by Ouchi Shinko Chemical Industrial, cross-linking accelerator) 1.5 parts were added and the mixture kneaded at 50°C to prepare a cross-linkable nitrile rubber composition.

Cross-linked rubber which was obtained by cross-linking the obtained cross-linkable nitrile rubber composition was evaluated for normal physical properties (tensile strength and elongation), gasoline permeation resistance, and embrittlement temperature. The results are shown in Table 1.

### Example 2

When preparing a nitrile rubber composition, except for adding the vinyl chloride resin latex which was obtained in Production Example 3 to the latex composition (abc1) of nitrile rubber by a weight ratio giving an amount of vinyl chloride resin of 66 parts with respect to 100 parts of the nitrile rubber (a1) and, further, when preparing the cross-linkable nitrile rubber composition, adding di(butoxyethoxyethyl) adipate (product name "ADK Cizer RS-107", made by ADEKA, plasticizer) 40 parts, the same procedure was followed as in Example 1 to prepare each composition and evaluate it. The results are shown in Table 1.

### Example 3

In the preparation of the layered inorganic filler aqueous dispersion, except for using a product name "Homodisper" (made by Primix Corporation) and agitating at 30 °C and 600 rpm for 30 minutes, the same procedure was followed as in Example 2 to prepare each composition and evaluate it. The results are shown in Table 1.

### Example 4

In the preparation of a layered inorganic filler aqueous dispersion, except for using a product name "Bottom Vortex Disperser" (made by Unozawa-Gumi Iron Works, Ltd.) and agitating at 30 °C and 3,600 rpm for 1 hour, the same procedure was followed as in Example 2 to prepare each composition and evaluate it. The results are shown in Table 1.

### Example 5

When preparing a nitrile rubber composition, except for adding, instead of the vinyl chloride resin latex which was obtained in Production Example 3, the acrylic resin latex which was obtained in Production Example 4 in a weight ratio giving an amount of acrylic resin of 66 parts with respect to 100 parts of the nitrile rubber (a1), the same procedure was followed as in Example 4 to prepare each composition and evaluate it. The results are shown in Table 1.

### Example 6

Except for using, instead of the latex of the nitrile rubber (a1), the latex of the hydrogenated nitrile rubber (a2) which was obtained in Production Example 2, the same procedure was followed as in Example 1 to prepare each composition and evaluate it. The results are shown in Table 2.

### Comparative Example 1

In the preparation of a layered inorganic filler aqueous dispersion, except for using the product name "Homodisper" (made by Primix Corporation) and agitating at 30°C and 400 rpm for 10 minutes, the same procedure was followed as in Example 2 to prepare each composition and evaluate it. The results are shown in Table 1.

### Comparative Example 2

In the preparation of a layered inorganic filler aqueous dispersion, except for using, instead of the product name "Homodisperser" (made by Primix Corporation), the product name "Nanomizer" (made by Yoshida Kikai Co., Ltd., performing dispersion not by agitating blades but by impact) and passing the materials through an impact type generator at 150 MPa one time, the same procedure was followed as in Example 2 to prepare each composition and evaluate it. The results are shown in Table 1.

### Comparative Example 3

In the preparation of a layered inorganic filler aqueous dispersion, except for using the product name "Homodisper" (made by Primix Corporation) and agitating at 30°C and 400 rpm for 10 minutes, the same procedure was followed as in Example 6 to prepare each composition and evaluate it. The results are shown in Table 2.

Table 1

**Table 1**

| | | Example 1 | Example 2 | Example 3 | Example 4 | Example 5 | Comp. Ex. 1 | Comp. Ex. 2 |
|---|---|---|---|---|---|---|---|---|
| | Layered inorganic filler | | | | | | | |
| | Median size (d50) (*µ*m) | 0.23 | 0.23 | 4.0 | 0.24 | 0.24 | 6.2 | 0.18 |
| | d90-d10 (*µ*m) | 1.56 | 1.56 | 24.7 | 1.15 | 1.15 | 30.4 | 1.01 |
| | Volume average particle size (*µ*m) | 1.43 | 1.43 | 25.5 | 0.98 | 0.98 | 40.8 | 0.71 |
| | Nitrile rubber | a1 | a1 | a1 | a1 | a1 | a1 | a1 |
| | Acrylonitrile units (wt%) | 50 | 50 | 50 | 50 | 50 | 50 | 50 |
| | Butadiene units (wt%) | 48 | 48 | 48 | 48 | 48 | 48 | 48 |
| | 2-vinylpyridine units (wt%) | 2 | 2 | 2 | 2 | 2 | 2 | 2 |
| | Nitrile rubber composition | | | | | | | |
| | Nitrile rubber (parts) | 100 | 100 | 100 | 100 | 100 | 100 | 100 |
| | Montmorillonite (parts) | 20 | 20 | 20 | 20 | 20 | 20 | 20 |
| | Plasticizer (parts) | 30 | 50 | 50 | 50 | 50 | 50 | 50 |
| | Vinyl chloride resin (parts) | - | 66 | 66 | 66 | - | 66 | 66 |
| | Acrylic resin (parts) | - | - | - | - | 66 | - | - |
| Tensile strength (MPa) | | 15.6 | 16.1 | 16.4 | 16.3 | 15.6 | 16.4 | 15.5 |
| Elongation (%) | | 443 | 437 | 458 | 431 | 469 | 450 | 408 |
| Embrittlement temperature (°C) | | -26.1 | -24.6 | -23.8 | -25.4 | -25.5 | -20.2 | -20.2 |
| Gasoline permeation coefficient (Fuel CE20) (g·mm/m²·day) | | 355 | 348 | 342 | 318 | 342 | 386 | 320 |

Table 2

**Table 2**

| | | Example 6 | Comp. Ex. 3 |
|---|---|---|---|
| | Layered inorganic filler | | |
| | Median size (d50) (*µ*m) | 0.23 | 6.2 |
| | d90-d10 (*µ*m) | 1.56 | 30.4 |
| | Volume average particle size (*µ*m) | 1.43 | 40.8 |
| | Nitrile rubber | a2 | a2 |
| | Acrylonitrile units (wt%) | 50 | 50 |
| | Butadiene units (including hydrogenated parts) (wt%) | 48 | 48 |
| | 2-vinylpyridine units (wt%) | 2 | 2 |
| | Iodine value | 23 | 23 |
| | Nitrile rubber composition | | |
| | Nitrile rubber (parts) | 100 | 100 |
| | Montmorillonite (parts) | 20 | 20 |
| | Plasticizer (parts) | 30 | 30 |
| | Vinyl chloride resin (parts) | - | - |
| | Acryl resin (parts) | - | - |
| Tensile strength (MPa) | | 22.8 | 22.7 |
| Elongation (%) | | 492 | 500 |
| Embrittlement temperature (°C) | | -35.4 | -31.6 |
| Gasoline permeation coefficient (Fuel CE20) (g·mm/m²·day) | | 362 | 399 |

From Table 1 and Table 2, the result was that cross-linked rubber which is obtained by cross-linking a nitrile rubber composition which contains a predetermined amount of a layered inorganic filler (B) which has a surface area particle size distribution prescribed in the present invention is good in normal physical properties and is excellent in gasoline permeation resistance and cold resistance (Examples 1 to 6).

As opposed to this, the result was that in the case where a wet-type disperser is used to disperse the layered inorganic filler and the speed and agitation time are low and short and "a) a median size (d50) of the cumulative surface area distribution" in the surface area particle size distribution of the layered inorganic filler is too large compared with the range prescribed in the present application, the gasoline permeation resistance and cold resistance are inferior (Comparative Example 1 and Comparative Example 3).

Further, in the case where dispersion is performed under a powerful shear force (inorganic filler dispersed not by agitator blades, but by impact) and a layered inorganic filler where the "a) a median size (d50) of the cumulative surface area distribution" and "b) d90-d10 of the cumulative surface area distribution" become too small compared with the ranges prescribed in the present application, the "elongation" in the normal physical properties becomes low and the cold resistance deteriorates (Comparative Example 2).

## Claims

1. A nitrile rubber composition containing
a nitrile rubber (A) which contains, with respect to the total monomer units,
- 20 to 80 wt% of α,β-ethylenically unsaturated nitrile monomer units,
- 20 to 80 wt% of conjugated diene monomer units which may be at least partially hydrogenated, and
- 0 to 30 wt% of cationic monomer units selected from the group consisting of cation-containing monomer units and monomer units able to form cations and
a layered inorganic filler (B) with a surface area particle size distribution, determined using a laser diffraction/scattering particle size measuring device, where
a) a median size (d50) of the cumulative surface area distribution is 0.20 µm to 6.0 µm and
b) d90-d10 of the cumulative surface area distribution is 1.1 µm or more
in a ratio of 1 to 100 parts by weight with respect to 100 parts by weight of the nitrile rubber (A), wherein
the nitrile rubber (A) has a Mooney viscosity (ML₁₊₄, 100°C), measured in accordance with JIS K 6300, of 3 to 250, and
the layered inorganic filler (B) has an aspect ratio of 30 to 2000, which is calculated by finding the ratio of the planar average size and average thickness of the primary particles of the layered inorganic filler (B), wherein the planar average size and average thickness are values of number averages which are obtained by measuring the sizes in the planar direction and thicknesses of 100 particles of the layered inorganic filler (B) which have been randomly selected by an interatomic microscope and calculating the arithmetic averages.

2. The nitrile rubber composition as set forth in claim 1
wherein a content ratio of said cationic monomer units of said nitrile rubber (A) is 0.1 to 20 wt%.

3. The nitrile rubber composition as set forth in claim 2
wherein the monomer which forms said cationic monomer units is a vinyl group-containing cyclic tertiary amine monomer.

4. The nitrile rubber composition as set forth in any one of claims 1 to 3 further containing at least one type of thermoplastic resin selected from the group consisting of a vinyl chloride resin and an acrylic resin in a ratio of 1 to 150 parts by weight with respect to 100 parts by weight of said nitrile rubber (A).

5. A cross-linkable nitrile rubber composition containing the nitrile rubber composition as set forth in any one of claims 1 to 4 and a cross-linking agent.

6. A cross-linked rubber obtained by cross-linking the cross-linkable nitrile rubber composition as set forth in claim 5.

7. A hose made from the cross-linked rubber as set forth in claim 6.

8. A method of production of the nitrile rubber composition as set forth in claim 1 which comprises mixing a latex of a nitrile rubber (A) which contains, with respect to the total monomer units,
- 20 to 80 wt% of α,β-ethylenically unsaturated nitrile monomer units,
- 20 to 80 wt% of conjugated diene monomer units which may be at least partially hydrogenated, and
- 0 to 30 wt% of cationic monomer units selected from the group consisting of cation-containing monomer units and monomer units able to form cations and
an aqueous dispersion (C) of a layered inorganic filler (B) with a surface area particle size. distribution, determined using a laser diffraction/scattering particle size measuring device, where
a) a median size (d50) of the cumulative surface area distribution is 0.20 µm to 6.0 µm and
b) d90-d10 of the cumulative surface area distribution is 1.1 µm or more
in a weight ratio giving a ratio of said layered inorganic filler (B) with respect to 100 parts by weight of the nitrile rubber (A) of 1 to 100 parts by weight, next, causing the obtained mixture to coagulate to cause the formation of crumbs and drying the same, wherein
the nitrile rubber (A) has a Mooney viscosity (ML₁₊₄, 100°C), measured in accordance with JIS K 6300, of 3 to 250, and
the layered inorganic filler (B) has an aspect ratio of 30 to 2000, which is calculated by finding the ratio of the planar average size and average thickness of the primary particles of the layered inorganic filler (B), wherein the planar average size and average thickness are values of number averages which are obtained by measuring the sizes in the planar direction and thicknesses of 100 particles of the layered inorganic filler (B) which have been randomly selected by an interatomic microscope and calculating the arithmetic averages.

## Patentansprüche

1. Nitrilkautschukzusammensetzung, enthaltend
einen Nitrilkautschuk (A), welcher bezüglich der Gesamtmonomereinheiten
- 20 bis 80 Gew.-% α,β-ethylenisch ungesättigte Nitrilmonomereinheiten,
- 20 bis 80 Gew.-% konjugierte Dienmonomereinheiten, welche mindestens teilweise hydriert sein können, und
- 0 bis 30 Gew.-% kationische Monomereinheiten, ausgewählt aus der Gruppe, bestehend aus Kationen enthaltenden Monomereinheiten und Monomereinheiten, welche fähig sind, Kationen zu bilden,
enthält, und
einen geschichteten anorganischen Füllstoff (B) mit einer Oberflächen-Partikelgrößenverteilung, welche unter Verwendung eines Laserbeugungs-/Streuungs-Partikelgrößenmessgeräts bestimmt wurde, wobei
a) eine mittlere Größe (d50) der kumulativen Oberflächenverteilung 0,20 µm bis 6,0 µm ist und
b) d90-d10 der kumulativen Oberflächenverteilung 1,1 µm oder mehr ist
in einem Verhältnis von 1 zu 100 Gewichtsteilen bezüglich 100 Gewichtsteilen des Nitrilkautschuks (A), wobei
der Nitrilkautschuk (A) eine Mooney-Viskosität (ML₁₊₄, 100°C), welche gemäß JIS K 6300 gemessen wurde, von 3 bis 250 hat und
der geschichtete anorganische Füllstoff (B) ein Seitenverhältnis von 30 bis 2000 hat, welches durch Bestimmen des Verhältnisses der planaren durchschnittlichen Größe und der durchschnittlichen Dicke der Primärpartikel des geschichteten anorganischen Füllstoffs (B) berechnet wird, wobei die planare durchschnittliche Größe und die durchschnittliche Dicke Werte der Zahlenmittelwerte sind, welche durch Messen der Größen in der planaren Richtung und Dicken von 100 Partikeln des geschichteten anorganischen Füllstoffs (B), welche zufällig ausgewählt worden waren, mit Hilfe eines interatomaren Mikroskops und durch Berechnen der arithmetischen Mittel erhalten werden.

2. Nitrilkautschukzusammensetzung gemäß Anspruch 1, wobei ein Gehaltsverhältnis der genannten kationischen Monomereinheiten des genannten Nitrilkautschuks (A) 0,1 bis 20 Gew.-% ist.

3. Nitrilkautschukzusammensetzung gemäß Anspruch 2, wobei das Monomer, welches genannte kationische Monomereinheiten bildet, ein vinylgruppenhaltiges cyclisches tertiäres Aminmonomer ist.

4. Nitrilkautschukzusammensetzung gemäß einem der Ansprüche 1 bis 3, welche ferner mindestens einen Typ an thermoplastischem Harz, ausgewählt aus der Gruppe, bestehend aus einem Vinylchloridharz und einem acrylischen Harz, in einem Verhältnis von 1 zu 150 Gewichtsteilen bezüglich 100 Gewichtsteilen von genanntem Nitrilkautschuk (A) enthält.

5. Vernetzbare Nitrilkautschukzusammensetzung, welche die Nitrilkautschukzusammensetzung, dargestellt in einem der Ansprüche 1 bis 4, und ein Vernetzungsmittel enthält.

6. Vernetzter Kautschuk, welcher durch Vernetzen der vernetzbaren Nitrilkautschukzusammensetzung gemäß Anspruch 5 erhalten wurde.

7. Schlauch, welcher aus dem vernetzten Kautschuk gemäß Anspruch 6 hergestellt wurde.

8. Verfahren zur Herstellung der Nitrilkautschukzusammensetzung gemäß Anspruch 1, welches Mischen eines Latex eines Nitrilkautschuks (A), welcher bezüglich der Gesamtmonomereinheiten
- 20 bis 80 Gew.-% α,β-ethylenisch ungesättigte Nitrilmonomereinheiten,
- 20 bis 80 Gew.-% konjugierte Dienmonomereinheiten, welche mindestens teilweise hydriert sein können, und
- 0 bis 30 Gew.-% kationische Monomereinheiten, ausgewählt aus der Gruppe, bestehend aus Kationen enthaltenden Monomereinheiten und Monomereinheiten, welche fähig sind, Kationen zu bilden,
enthält, und
einer wässrigen Dispersion (C) eines geschichteten anorganischen Füllstoffs (B) mit einer Oberflächen-Partikelgrößenverteilung, welche unter Verwendung eines Laserbeugungs-/Streuungs-Partikelgrößenmessgeräts bestimmt wurde, wobei
a) eine mittlere Größe (d50) der kumulativen Oberflächenverteilung 0,20 µm bis 6,0 µm ist und
b) d90-d10 der kumulativen Oberflächenverteilung 1,1 µm oder mehr ist
in einem Gewichtsverhältnis, welches ein Verhältnis des genannten geschichteten anorganischen Füllstoffs (B) bezüglich 100 Gewichtsteilen des Nitrilkautschuks (A) von 1 bis 100 Gewichtsteilen ergibt, dann, Bewirken, dass die erhaltene Mischung koaguliert, um die Bildung von Krümeln zu verursachen und Trocknen dergleichen, wobei
der Nitrilkautschuk (A) eine Mooney-Viskosität (ML₁₊₄, 100°C), welche gemäß JIS K 6300 gemessen wurde, von 3 bis 250 hat und
der geschichtete anorganische Füllstoff (B) ein Seitenverhältnis von 30 bis 2000 hat, welches durch Bestimmen des Verhältnisses der planaren durchschnittlichen Größe und der durchschnittlichen Dicke der Primärpartikel des geschichteten anorganischen Füllstoffs (B) berechnet wird, wobei die planare durchschnittliche Größe und die durchschnittliche Dicke Werte der Zahlenmittelwerte sind, welche durch Messen der Größen in der planaren Richtung und Dicken von 100 Partikeln des geschichteten anorganischen Füllstoffs (B), welche zufällig ausgewählt worden waren, mit Hilfe eines interatomaren Mikroskops und durch Berechnen der arithmetischen Mittel erhalten werden, umfasst.

## Revendications

1. Composition de caoutchouc de nitrile contenant un caoutchouc de nitrile (A) qui contient, par rapport aux motifs de monomères totaux,
- 20 à 80 % en poids de motifs de monomères de nitrile α,β-éthyléniquement insaturé,
- 20 à 80 % en poids de motifs de monomères de diène conjugué qui peuvent être au moins partiellement hydrogénés, et
- 0 à 30 % en poids de motifs de monomères cationique choisis dans le groupe constitué de motifs de monomères contenant un cation et de motifs de monomères capable de former des cations et
une charge inorganique en couches (B) avec une distribution de taille de particule de surface, déterminée à l'aide d'un dispositif de mesure de taille de particule par diffraction/diffusion par laser, où
a) une taille médiane (d50) de la distribution de surface cumulative est de 0,20 µm à 6,0 µm et
b) d90-d10 de la distribution de surface cumulative est de 1,1 µm ou plus
dans un rapport de 1 à 100 parties en poids par rapport à 100 parties en poids du caoutchouc de nitrile (A), dans laquelle
le caoutchouc de nitrile (A) a une consistance Mooney (ML₁₊₄, 100 °C), mesurée selon JIS K 6300, de 3 à 250, et
la charge inorganique en couches (B) a un rapport de forme de 30 à 2 000, qui est calculé en trouvant le rapport entre la taille moyenne et l'épaisseur moyenne planes des particules primaires de la charge inorganique en couches (B), dans laquelle la taille moyenne et l'épaisseur moyenne planes sont des valeurs de moyennes en nombre qui sont obtenues en mesurant les tailles dans la direction plane et les épaisseurs de 100 particules de la charge inorganique en couches (B) qui ont été choisies aléatoirement par un microscope interatomique et en calculant les moyennes arithmétiques.

2. Composition de caoutchouc de nitrile selon la revendication 1, dans laquelle un rapport de teneur desdits motifs de monomères cationiques dudit caoutchouc de nitrile (A) est de 0,1 à 20 % en poids.

3. Composition de caoutchouc de nitrile selon la revendication 2, dans laquelle le monomère qui forme lesdits motifs de monomères cationiques est un monomère d'amine tertiaire cyclique contenant un groupe vinyle.

4. Composition de caoutchouc de nitrile selon l'une quelconque des revendications 1 à 3, contenant en outre au moins un type de résine thermoplastique choisi dans le groupe constitué d'une résine de chlorure de vinyle et d'une résine acrylique dans un rapport de 1 à 150 parties en poids par rapport à 100 parties en poids dudit caoutchouc de nitrile (A).

5. Composition de caoutchouc de nitrile réticulable contenant la composition de caoutchouc de nitrile selon l'une quelconque des revendications 1 à 4 et un agent de réticulation.

6. Caoutchouc réticulé obtenu en réticulant la composition de caoutchouc de nitrile réticulable selon la revendication 5.

7. Tuyau flexible réalisé à partir du caoutchouc réticulé selon la revendication 6.

8. Procédé de production de la composition de caoutchouc de nitrile selon la revendication 1 qui comprend le mélange d'un latex d'un caoutchouc de nitrile (A) qui contient, par rapport aux motifs de monomères totaux,
- 20 à 80 % en poids de motifs de monomères de nitrile α,β-éthyléniquement insaturé,
- 20 à 80 % en poids de motifs de monomères de diène conjugué qui peuvent être au moins partiellement hydrogénés, et
- 0 à 30 % en poids de motifs de monomères cationique choisis dans le groupe constitué de motifs de monomères contenant un cation et de motifs de monomères capables de former des cations et
une dispersion aqueuse (C) d'une charge inorganique en couches (B) avec une distribution de taille de particule de surface déterminée à l'aide d'un dispositif de mesure de taille de particule par diffraction/diffusion par laser, où
a) une taille médiane (d50) de la distribution de surface cumulative est de 0,20 µm à 6,0 µm et
b) d90-d10 de la distribution de surface cumulative est de 1,1 µm ou plus
dans un rapport en poids donnant un rapport de ladite charge inorganique en couches (B) par rapport à 100 parties en poids du caoutchouc de nitrile (A) de 1 à 100 parties en poids, ensuite le fait d'amener le mélange obtenu à coaguler pour provoquer la formation de granulés et leur séchage, dans lequel le caoutchouc de nitrile (A) a une consistance Mooney (ML₁₊₄, 100 °C) , mesurée selon JIS K 6300, de 3 à 250, et
la charge inorganique en couches (B) a un rapport de côté de 30 à 2 000, qui est calculé en trouvant le rapport entre la taille moyenne et l'épaisseur moyenne planes des particules primaires de la charge inorganique en couches (B), dans lequel la taille moyenne et l'épaisseur moyenne planes sont des valeurs de moyennes en nombre qui sont obtenues en mesurant les tailles dans la direction plane et les épaisseurs de 100 particules de la charge inorganique en couches (B) qui ont été choisies aléatoirement par un microscope interatomique et en calculant les moyennes arithmétiques.
